# FASCICULE DE BREVET EUROPEEN

(11) **EP 2 702 907 B1**
(45) Date de publication et mention de la délivrance du brevet: **13.04.2016**
(21) Numéro de dépôt: 13182674.5
(22) Date de dépôt: 02.09.2013
(51) Int. Cl.: A47J 27/08

(54) **Couvercle d'appareil de cuisson sous pression à fabrication simplifiée et appareil de cuisson sous pression équipé d'un tel couvercle**
Deckel für Dampfdruckkochtopf mit vereinfachter Konstruktion und Dampfdruckkochtopf mit solchem Deckel.
Lid of pressure cooking apparatus of simplified construction and pressure cooking apparatus with such lid.

(30) Priorité: 03.09.2012 FR 1258206
(43) Date de publication de la demande: 05.03.2014
(73) Titulaire: SEB S.A., 69130 Ecully (FR)
(72) Inventeur: Chameroy, Eric, 21260 VERONNES (FR); Blanc, Hervé, Eugène, René, 21000 DIJON (FR); Chaillard, Hubert, Roger, Bernard, 52250 LONGEAU PERCEY (FR); Anota, Daniel, Jean, Marie, 21000 DIJON (FR)
(74) Mandataire: Martin, Didier Roland Valéry

(56) Documents cités:
- EP-A2- 1 342 440
- WO-A1-92/03080
- WO-A1-03/015594
- WO-A1-2006/061339

## Description

La présente invention se rapporte au domaine technique général des appareils de cuisson d'aliments sous pression, notamment à usage domestique, et en particulier au domaine technique de la fabrication et de la conception de couvercles d'appareils de cuisson destinés à être rapportés de manière étanche sur la cuve de l'appareil pour former une enceinte de cuisson étanche, ledit couvercle étant pourvu d'au moins une mâchoire de verrouillage montée radialement mobile sur le couvercle pour assurer le verrouillage / déverrouillage du couvercle sur la cuve.

La présente invention concerne plus particulièrement un couvercle d'appareil de cuisson d'aliments sous pression destiné à être rapporté de manière étanche sur une cuve pour former une enceinte de cuisson étanche, ledit couvercle étant pourvu d'au moins une mâchoire de verrouillage montée radialement mobile sur le couvercle pour assurer le verrouillage / déverrouillage du couvercle sur la cuve par l'intermédiaire d'un dispositif de commande apte à agir sur un axe d'entraînement relié à un bras entraîneur solidaire de ladite au moins une mâchoire de verrouillage par l'une de ses extrémités, dite extrémité externe, l'axe d'entraînement étant relié audit bras entraîneur vers son autre extrémité, dite extrémité interne, ledit couvercle étant pourvu d'un système de guidage du déplacement radial de ladite au moins une mâchoire de verrouillage.

La présente invention concerne également un appareil de cuisson d'aliments sous pression, tel un autocuiseur, équipé d'un couvercle conforme à l'invention.

On connaît déjà des appareils de cuisson d'aliments sous pression, notamment à usage domestique, tels des autocuiseurs qui sont équipés de mâchoires de verrouillage montées radialement mobiles sur le couvercle pour assurer le verrouillage / déverrouillage du couvercle sur la cuve.

Les appareils de cuisson d'aliments sous pression connus à ce jour sont généralement pourvus de deux mâchoires de verrouillage montées mobiles radialement en position diamétralement opposée sur le couvercle et comportent une section en U de manière à pouvoir venir enserrer le rebord supérieur du couvercle en position de verrouillage et assurer ainsi le verrouillage.

Le déplacement radial des mâchoires est réalisé à l'aide de dispositifs de commande, par exemple un bouton ou une manette, montés sur le couvercle et destinés à être actionnés par l'utilisateur afin de déplacer les mâchoires selon une direction radiale, externe, c'est à dire vers l'extérieur du couvercle afin d'atteindre la position de déverrouillage dans laquelle le couvercle peut être enlevé de la cuve.

Le dispositif de commande permet également à l'utilisateur de commander et déplacer les mâchoires en direction radiale interne, c'est à dire vers l'intérieur ou le centre du couvercle afin de déplacer les mâchoires vers la position de verrouillage dans laquelle le couvercle est solidement verrouillé sur la cuve pour constituer, grâce à l'interposition d'un joint élastomère, une enceinte de cuisson étanche.

Les appareils de cuisson d'aliments sous pression connus et du type mentionné précédemment mettent en oeuvre des mâchoires de verrouillage qui sont reliées à un bras entraîneur monté en règle générale de manière radiale sur le couvercle, de telle sorte que le bouton de commande agit, avec une cinématique appropriée, sur le bras entraîneur afin d'assurer son déplacement radial dans le sens interne ou externe.

Il est alors nécessaire d'assurer le guidage radial du déplacement des mâchoires et du bras entraîneur associé afin de conserver un déplacement radial aisé et maîtrisé lorsque l'utilisateur actionne l'organe de commande, et ce pendant toute la durée du cycle d'utilisation de l'appareil qui s'étend généralement sur plusieurs années.

Les dispositifs connus mettent généralement en oeuvre un axe d'entraînement qui est monté à demeure sur le couvercle près de son centre et sur lequel une extrémité du bras entraîneur est enfilée par le biais d'une fente procurant ainsi un guidage radial.

Les axes d'entraînement sont rapportés sur la face inférieure du couvercle par soudure, sertissage ou vissage et procurent, en règle générale, une bonne solidité du guidage, de telle sorte que les systèmes classiques de ce type présentent un intérêt certain.

Il s'avère néanmoins que les dispositifs connus nécessitent des opérations industrielles de montage, d'une part de l'axe d'entraînement lui-même sur la face inférieure du couvercle et, d'autre part, des bras entraîneurs avec les mâchoires ainsi que divers organes additionnels, qui impliquent de nombreuses opérations industrielles, ce qui *in fine* complique cette opération et la rend coûteuse sur le plan industriel.

Il s'avère également que le guidage des mâchoires n'est pas optimal et que l'existence d'un axe d'entraînement monté et fixé à demeure sur le couvercle complique également toutes les opérations de retouches du couvercle qui pourraient s'avérer nécessaires au cours du processus industriel de fabrication.

Il a déjà été également proposé de fixer à demeure l'axe d'entrainement sur le bras entraîneur pour remédier en partie aux inconvénients mentionnés ci-dessus. Toutefois, pour maintenir et garantir un bon alignement des mâchoires lors de leur déplacement, le guidage des mâchoires s'effectue à l'aide de pièces de guidage fixées sur le couvercle de telle sorte que les problèmes découlant de la fixation de pièces sur le couvercle et mentionnés précédemment ne sont pas résolus. Les appareils de cuisson d'aliments sous pression de ce type souffrent par ailleurs d'un autre inconvénient lié au grand nombre de pièces nécessaires pour réaliser un guidage des mâchoires.

Le document WO-03/015594 décrit un dispositif de fermeture pour un appareil de cuisson sous pression.

Les objets assignés à l'invention visent par conséquent à porter remède aux différents inconvénients énumérés précédemment et à proposer un nouveau couvercle d'appareil de cuisson d'aliments sous pression dont la fabrication et le montage sont simplifiés et qui permette un excellent guidage du déplacement radial des mâchoires de verrouillage.

Un autre objet de l'invention vise à proposer un nouveau couvercle d'appareil de cuisson sous pression dont le guidage radial est sûr et éprouvé.

Un autre objet de l'invention vise à proposer un nouveau couvercle d'appareil de cuisson d'aliments sous pression qui permette de garantir l'alignement des mâchoires de verrouillage lors de leur déplacement à l'aide de moyens simples.

Un autre objet de l'invention vise à proposer un couvercle d'appareil de cuisson d'aliments sous pression permettant un positionnement précis de l'ensemble des pièces participant au déplacement des mâchoires de verrouillage.

Les objets assignés à l'invention sont atteints à l'aide d'un couvercle d'appareil de cuisson d'aliments sous pression conforme à la revendication 1.

Les objets assignés à l'invention sont également atteints à l'aide d'un appareil de cuisson sous pression d'aliments comprenant une cuve et un couvercle selon l'invention.

D'autres particularités et avantages de l'invention apparaîtront plus en détails à la lecture de la description qui suit, en référence aux dessins annexés, donnés à titre purement illustratif et non limitatif, dans lesquels :
- La figure 1 illustre, selon une vue en perspective, une figure générale de dessus d'un couvercle d'appareil de cuisson d'aliments sous pression conforme à l'invention.
- La figure 2 illustre, selon une vue en perspective partielle prise de dessous, les principaux éléments constitutifs du montage et du guidage des mâchoires de verrouillage sur un couvercle d'appareil de cuisson d'aliments sous pression conforme à l'invention.
- La figure 3 illustre, selon une vue en coupe transversale longitudinale effectuée selon un plan médian du couvercle de la figure 1, le détail de montage des principaux éléments constitutifs d'un couvercle selon l'invention.
- La figure 4 illustre, selon une vue de dessus, un couvercle d'appareil de cuisson d'aliments sous pression conforme à l'invention montrant les principaux éléments constitutifs dudit couvercle disposés sous son capot.

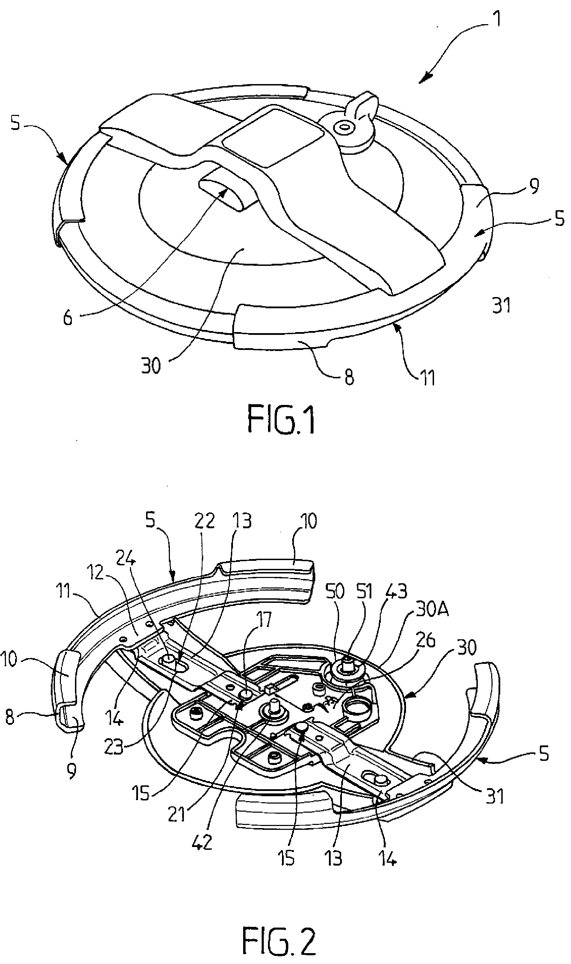

Tel qu'illustré aux figures 1 à 4, l'invention concerne un couvercle 1 d'appareil de cuisson d'aliments sous pression destiné à être rapporté de manière étanche sur une cuve (non représentée) pour former une enceinte de cuisson étanche et constituer ainsi un appareil de cuisson d'aliments sous pression, tel qu'un autocuiseur.

L'appareil de cuisson sous pression comportant un couvercle 1 conforme à l'invention est constitué par un autocuiseur, de préférence à usage domestique, formé par la combinaison du couvercle 1 et d'une cuve (non représentée aux figures). La cuve d'un autocuiseur est bien connue de l'homme du métier, et par exemple, est de forme sensiblement cylindrique et pourvue d'un fond apte à diffuser la chaleur à partir duquel s'élèvent des parois se terminant par un rebord supérieur sur lequel le couvercle 1 vient reposer par l'intermédiaire d'un joint annulaire 3, par exemple en élastomère, pour former l'enceinte de cuisson étanche.

La cuve et la majeure partie du couvercle 1 sont réalisées, de manière connue, à partir d'un matériau métallique, tel que l'acier inoxydable, la cuve étant, de manière préférentielle, de forme sensiblement cylindrique, le couvercle 1 étant alors de forme adaptée sensiblement circulaire et comportant un disque métallique 40 format l'ossature dudit couvercle 1. Bien évidemment, à titre de variante, la cuve et le couvercle 1 peuvent être de toute forme géométrique autre que, respectivement cylindrique et circulaire, et par exemple sensiblement ovales sans sortir du cadre de l'invention.

Tel qu'illustré, le couvercle 1 conforme à l'invention est pourvu d'au moins une mâchoire de verrouillage 5, réalisée en matériau métallique et montée radialement mobile sur le couvercle 1 pour assurer le verrouillage / déverrouillage du couvercle 1 sur la cuve par l'intermédiaire d'un dispositif de commande 6 destiné à être manipulé par l'utilisateur de l'appareil de cuisson pour commander le déplacement radial de ladite au moins une mâchoire de verrouillage 5.

Tel qu'illustré aux figures à titre purement préférentiel, le couvercle 1 selon l'invention est pourvu de deux mâchoires de verrouillage 5 qui sont montées en position diamétralement opposée sur le couvercle 1 en regard de l'axe central X-X' de révolution du couvercle et de son centre géométrique 7. Bien évidemment, à titre de variante, un nombre supérieur de mâchoires de verrouillage 5 peut être monté sur un couvercle 1 conforme à l'invention, et par exemple trois ou quatre mâchoires, voire plus, sans pour autant sortir du cadre de l'invention.

Tel qu'illustré, et à titre préférentiel seulement, les mâchoires de verrouillage 5 présentent une section transversale en U, une âme centrale 8, une aile supérieure 9 et deux ailes inférieures 10 séparées par une découpe centrale 11 s'étendant jusque dans l'âme centrale 8 de manière que seules les ailes inférieures 10 soient aptes à venir en prise avec les bords supérieurs de la cuve pour assurer le verrouillage. Une telle construction est bien évidemment optionnelle, les ailes inférieures 10 pouvant s'étendre sur toute la longueur du segment courbe formant la mâchoire de verrouillage 5.

Tel qu'illustré aux figures 2 à 4, la partie centrale 12 de l'aile supérieure 9 est reliée, par exemple par soudure, sertissage ou vissage, à un bras entraîneur 13, réalisé par exemple en matériau métallique et qui est ainsi solidaire par une extrémité 14 de la mâchoire de verrouillage 5.

Au sens de l'invention, et par commodité, on distinguera la direction radiale interne correspondant à une direction ou un sens radial dirigé vers l'axe central X-X' de l'appareil, et par exemple vers le centre 7 du couvercle 1 et la direction radiale externe dirigée vers l'extérieur de l'appareil c'est-à-dire en éloignement du centre 7. Ainsi, le bras entraîneur 13 est solidaire de ladite au moins une mâchoire de verrouillage 5 par son extrémité 14 dite extrémité externe, l'autre extrémité 15 du bras entraîneur 13, dite extrémité interne, étant reliée à un axe d'entraînement 17. Ainsi, le couvercle 1 selon l'invention comporte un dispositif de commande 6 apte à agir, par l'intermédiaire d'une cinématique appropriée bien connue de l'homme du métier, sur l'axe d'entraînement 17 relié au bras entraîneur 13 lequel est solidaire de la mâchoire de verrouillage 5 par son extrémité externe 14, l'axe d'entraînement 17 étant relié audit bras entraîneur 13 vers son autre extrémité externe 14 de telle sorte que par action du dispositif de commande 6 sur l'axe d'entraînement 17, le bras entraîneur 13 est déplacé radialement selon la direction radiale externe F1 (déverrouillage) ou selon la direction radiale interne F2 (verrouillage).

Le dispositif de commande 6 ne fait pas partie de l'invention et comprend des moyens techniques bien connus de l'homme du métier pour former une chaîne cinématique permettant de déplacer radialement, selon la direction F1 ou F2, les bras entraîneurs 13 par action sur les axes d'entraînement 17 et, par exemple par l'intermédiaire de leviers (figure 1) ou boutons aptes à être manipulés et déplacés radialement ou en rotation pour venir déplacer, par exemple par l'intermédiaire de pièces intermédiaires (non représentées), les axes d'entraînement 17.

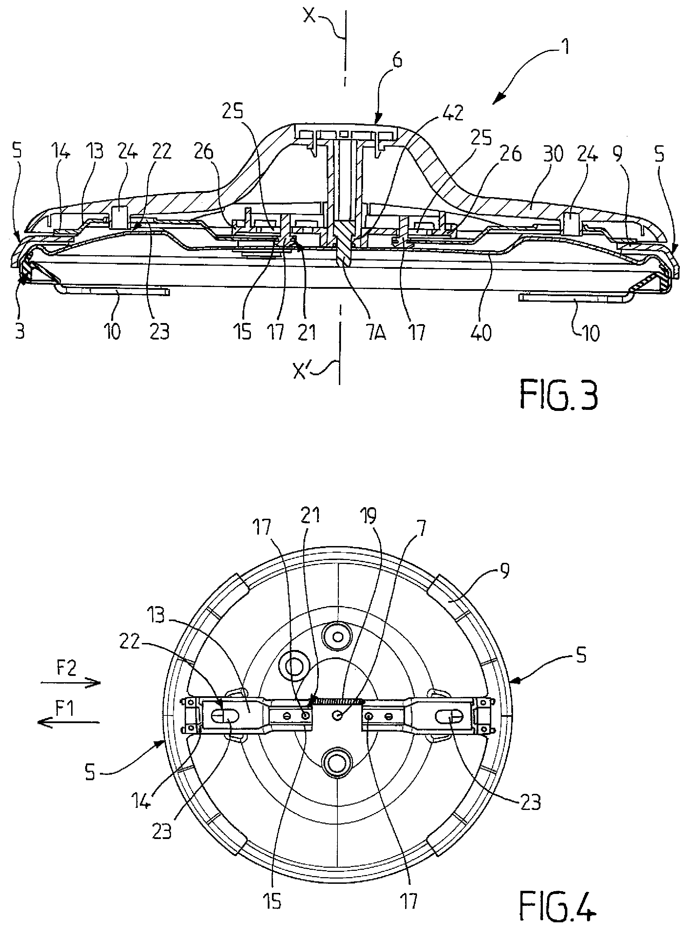

Tel qu'illustré à la figure 4, le couvercle 1 selon l'invention sera équipé d'un moyen de rappel 19, et par exemple d'un ressort hélicoïdal fonctionnant en traction et interposé entre deux extrémités opposées 15 de chacun des deux bras entraîneurs 13.

Selon une particularité importante de l'invention, le couvercle 1 est également pourvu d'un système de guidage du déplacement radial de ladite au moins une mâchoire de verrouillage 5, le système de guidage étant formé par des moyens de guidage séparés 21, 22 les uns des autres le long du bras entraîneur 13 pour former des moyens de guidage interne 21 et des moyens de guidage externe 22, l'axe d'entraînement 17 étant fixé à demeure sur le bras entraîneur 13.

Ainsi, selon l'invention, le système de guidage comprend deux moyens de guidage 21, 22 qui sont disposés et agissent en deux endroits distincts le long du bras entraîneur 13 et de son chemin de déplacement radial, l'un étant situé dans une zone interne c'est-à-dire proche du centre 13, l'autre étant situé dans une zone externe c'est-à-dire proche ou au voisinage de l'extrémité externe 14 du bras entraîneur 13. Cette disposition permet de garantir un bon alignement des mâchoires de verrouillage 5 lors de leurs déplacements radiaux selon la direction F1 ou F2 en réalisant un guidage équilibré sur toute la course de déplacement des mâchoires 5.

Selon une particularité de l'invention, le moyen de guidage interne 21 comprend l'axe d'entraînement 17 qui est fixé à demeure, par exemple par sertissage, à travers l'épaisseur de l'extrémité 15, lequel axe d'entraînement 17 se déplace donc radialement avec le bras entraîneur 13. Le moyen de guidage interne 21 comprend également une lumière de guidage 25 ménagée dans une pièce intermédiaire 26 disposée au-dessus du bras entraîneur 13, de telle sorte que l'axe d'entraînement 17 est guidé dans la lumière de guidage 25.

Selon une particularité avantageuse de l'invention, la pièce intermédiaire 26 est une platine, avantageusement en matériau plastique, montée sur un axe central 7 du couvercle matérialisé par un pion 7A. Cette disposition constructive permet d'obtenir facilement un moyen de centrer l'ensemble des pièces constitutives du couvercle 1 de manière particulièrement simple.

Selon une particularité importante de l'invention, les moyens de guidage externe 22 sont formés par une rainure de guidage 23 ménagée dans le bras entraîneur 13 vers sa partie externe, et par un moyen mâle 24 solidaire d'une pièce supérieure 30 disposée au-dessus du bras entraîneur 13.

De manière particulièrement avantageuse, la pièce supérieure 30 est disposée au-dessus de la pièce intermédiaire 26, c'est-à-dire au-dessus de la platine.

De manière particulièrement avantageuse, la pièce supérieure 30 est formée par un capot, avantageusement en matériau plastique, pourvu en tant que moyen mâle d'au moins un bossage ou un pivot, apte à être enfilé dans la rainure de guidage 23, ledit capot 30 venant coiffer la pièce intermédiaire 26 formant platine par l'intermédiaire d'un disque central 30A et étant monté sur l'axe central 7 et le pion 7A du couvercle 1.

La pièce supérieure 30 formée par le capot et le moyen mâle peuvent ainsi avantageusement appartenir à une même pièce, réalisée par exemple par moulage, afin notamment de simplifier le montage du couvercle 1.

Avantageusement, le capot 30 est pourvu d'au moins un bras radial de couverture 31 venant coiffer le bras entraîneur 13, le moyen mâle s'étendant orthogonalement à partir dudit bras radial de couverture 31. Dans l'exemple illustré aux figures, le capot 30 est pourvu de deux bras radiaux 31 s'étendant radialement à partir du disque central 30A et venant coiffer chacun des bras entraîneurs 13.

Selon une particularité intéressante de l'invention, les moyens de guidage interne 21 et externe 22 sont alignés radialement.

Selon une autre particularité de l'invention qui peut être indépendante des moyens de guidage des bras entraîneurs 13, le couvercle 1 est pourvu de moyens d'indexation de la position de la pièce supérieure 30 au sein du couvercle 1 afin de garantir une position précise de la pièce supérieure 30, en l'occurrence, le capot, au sein du couvercle 1 et en particulier en regard du disque métallique 40. De préférence, les moyens d'indexation comprennent deux passages ménagés dans le capot et formés par un passage central 42 et un passage latéral 43 pour s'indexer respectivement avec l'axe central 7 ou le pion central 7A du couvercle 1 et l'axe 51 d'une soupape 50 montée sur le couvercle, la soupape 50 étant par exemple une soupape de sécurité ou de régulation.

Les moyens d'indexation permettent ainsi de centrer la pièce supérieure 30 sur l'axe central X-X' et d'arrêter en rotation ladite pièce supérieure 30 par rapport audit axe central X-X'.

Selon la variante préférentielle de l'invention, le couvercle 1 comporte :
- deux mâchoires de verrouillage 5 montées radialement mobiles sur le couvercle 1, et en particulier sur le disque métallique 40 formant la pièce principale du couvercle, les deux mâchoires de verrouillage 5 étant montées en position diamétralement opposée par l'intermédiaire de deux bras entraîneurs 13 possédant chacun un axe d'entraînement 17 et une rainure de guidage 23,
- une platine 26 pourvue de deux lumières de guidage 25 pour recevoir et guider chacun des axes d'entraînement 17,
- un capot 30 pourvu d'un disque central 30A venant coiffer la platine 26, laquelle est vissée sur ledit capot 30, ledit capot 30 comportant deux bras radiaux 31 venant recouvrir les bras entraîneurs 13 et pourvus de deux bossages 24 venant s'insérer dans les rainures de guidage 23 des bras entraîneurs 13.

Ainsi, selon cette variante préférentielle, les bras radiaux 31 s'étendent à partir de la périphérie du disque central 30A et les moyens d'indexation, en l'occurrence les passages 42 et 43, sont ménagés à travers le disque central 30A.

Ainsi, selon l'invention, lorsque l'utilisateur souhaite déplacer radialement les mâchoires 5, il actionne le dispositif de commande 6, par exemple par pression ou mise en rotation, de telle sorte que les axes d'entraînement 7 sont déplacés corrélativement, par exemple selon la direction F1 pour obtenir un déverrouillage des mâchoires 5.

Selon l'invention, les axes d'entraînement 17 sont guidés radialement au sein des lumières de guidage 25 dans la zone interne proche du centre 7, alors que dans la zone externe des bras entraîneurs 13, ces derniers sont guidés dans leur déplacement radial par le moyen mâle 24, en l'occurrence un bossage du capot 30.

L'invention permet ainsi d'une part de garantir l'alignement des mâchoires de verrouillage 5 lors de leur déplacement radial, et ce sur une large plage de leur course, et d'autre part d'assurer une grande sécurité dans l'alignement des déplacements.

L'invention permet également de faciliter le montage de l'ensemble des pièces constitutives du couvercle 1 en facilitant le positionnement relatif de la platine 26, du capot 30 et des bras entraîneurs 13 avec les mâchoires 5 en alignant les bossages du capot 30 avec les lumières 25 de la platine 26.

En outre, le capot 30 peut être positionné de manière précise sur le disque 40 puisqu'il est monté sur le pion central 7A dudit couvercle 1 par son passage central 42 et sa position indexée de manière très précise par son passage latéral 43 qui est enfilé sur l'axe de la soupape 50.

Enfin, l'invention permet de s'affranchir de la nécessité de monter des axes de guidage du déplacement radial des bras entraîneurs 13 sur le couvercle, ce qui simplifie fortement la fabrication du couvercle et facilite les retouches éventuelles et son recyclage.

## Revendications

1. Couvercle (1) d'appareil de cuisson d'aliments sous pression destiné à être rapporté de manière étanche sur une cuve pour former une enceinte de cuisson étanche, ledit couvercle étant pourvu d'au moins une mâchoire de verrouillage (5) reliée à un bras entraîneur (13), montée radialement mobile sur le couvercle (1) pour assurer le verrouillage / déverrouillage du couvercle (1) sur la cuve par l'intermédiaire d'un dispositif de commande (6) apte à agir sur un axe d'entraînement (17) relié au bras entraîneur (13) qui est ainsi solidaire de ladite au moins une mâchoire de verrouillage (5) par l'une de ses extrémités dite extrémité externe (14), l'axe d'entraînement (17) étant fixé à demeure sur le bras entraîneur (13) vers son autre extrémité, dite extrémité interne (15), ledit couvercle étant pourvu d'un système de guidage du déplacement radial de ladite au moins une mâchoire de verrouillage (5), lequel système de guidage est formé par des moyens de guidage séparés les uns des autres le long du bras entraîneur (13), pour former moyens de guidage internes et des moyens de guidage externes, lesquels moyens de guidage externe sont formés par une rainure de guidage (23) ménagée dans le bras entraîneur (13) et par un moyen mâle (24) solidaire d'une pièce supérieure (30) disposée au-dessus du bras entraîneur (13).

2. Couvercle (1) selon la revendication 1 **caractérisé en ce que** le moyen de guidage interne comprend l'axe d'entraînement (17) et une lumière de guidage (25) ménagée dans une pièce intermédiaire (26) disposée au-dessus du bras entraîneur (13) de telle sorte que l'axe d'entraînement (17) est guidé dans la lumière de guidage (25).

3. Couvercle (1) selon la revendication 2 **caractérisé en ce que** la pièce intermédiaire (26) est une platine montée sur un axe central (7) du couvercle (1).

4. Couvercle (1) selon l'une des revendications 2 à 3 **caractérisé en ce que** la pièce supérieure (30) est disposée au-dessus de la pièce intermédiaire (26) formant platine.

5. Couvercle (1) selon la revendication 4 **caractérisé en ce que** la pièce supérieure (30) est formée par un capot pourvu en tant que moyen mâle (24) d'au moins un bossage (24) apte à être enfilé dans la rainure de guidage (23), ledit capot venant coiffer la platine (26) et étant monté sur l'axe central (7) du couvercle (1).

6. Couvercle (1) selon la revendication 5 **caractérisé en ce que** le capot est pourvu d'un moins un bras radial de couverture (31) venant coiffer le bras entraîneur (13).

7. Couvercle (1) selon l'une des revendications précédentes **caractérisé en ce que** les moyens de guidage externes et internes sont alignés radialement.

8. Couvercle (1) selon l'une des revendications 1 à 7 **caractérisé en ce qu'**il est pourvu de moyens d'indexation de la position de la pièce supérieure (30) au sein du couvercle (1).

9. Couvercle (1) selon la revendication 8 et l'une des revendications 5 ou 6 **caractérisé en ce que** les moyens d'indexation comprennent deux passages (42, 43) ménagés dans le capot et formées par un passage central (42) et un passage latéral (43) pour s'indexer respectivement avec l'axe central (7) du couvercle (1) et l'axe d'une soupape (50) montée sur le couvercle.

10. Couvercle (1) selon l'une des revendications précédentes **caractérisé en ce qu'**il comporte :
- deux mâchoires de verrouillage montées radialement mobiles sur le couvercle (1) en position diamétralement opposée par l'intermédiaire de deux bras entraîneurs avec chacun un axe d'entraînement (17) et une rainure de guidage (23),
- une platine (26) pourvue de deux lumières de guidage (25) pour recevoir et guider chacun des axes d'entraînement (17),
- un capot pourvu d'un disque central (30A) venant coiffer la platine (26), laquelle est vissée sur ledit capot, ledit capot comportant deux bras radiaux (31) venant recouvrir les bras entraîneurs (13) et pourvus de deux bossages (24) venant s'insérer dans les rainures de guidage (23) des bras entraîneurs (13).

11. Appareil de cuisson d'aliments sous pression comprenant une cuve et un couvercle (1) selon l'une des revendications 1 à 10.

## Patentansprüche

1. Deckel (1) eines Dampfdruckkochtopfes für Nahrungsmittel, der dazu bestimmt ist, dicht auf einen Behälter aufgesetzt zu werden, um einen dichten Kochbereich zu bilden, wobei der Deckel mit mindestens einer Verriegelungsbacke (5) versehen ist, die mit einem Antriebsarm (13) verbunden ist, der radial beweglich auf dem Deckel (1) montiert ist, um die Verriegelung/Entriegelung des Deckels (1) auf dem Behälter mit Hilfe einer Steuervorrichtung (6) zu gewährleisten, die geeignet ist, auf eine Antriebsachse (17) einzuwirken, die mit dem Antriebsarm (13) verbunden ist, der somit mit der mindestens einen Verriegelungsbacke (5) mit einem seiner Enden, äußeres Ende (14) genannt, verbunden ist, wobei die Antriebsachse (17) fix auf dem Antriebsarm (13) zu seinem anderen Ende, inneres Ende (15) genannt, hin befestigt ist, wobei der Deckel mit einem System zur Führung der Radialverschiebung der mindestens einen Verriegelungsbacke (5) versehen ist, wobei das Führungssystem von Führungsmitteln gebildet ist, die entlang des Antriebsarms (13) voneinander getrennt sind, um innere Führungsmittel und äußere Führungsmittel zu bilden, wobei die äußeren Führungsmittel von einer Führungsnut (23), die in dem Antriebsarm (13) ausgenommen ist, und von einem Einsteckmittel (24) gebildet sind, das mit einem oberen Stück (30), das über dem Antriebsarm (13) angeordnet ist, verbunden ist.

2. Deckel (1) nach Anspruch 1, **dadurch gekennzeichnet, dass** das innere Führungsmittel die Antriebsachse (17) und eine Führungsöffnung (25) umfasst, die in einem Zwischenstück (26), das über dem Antriebsarm (13) angeordnet ist, ausgenommen ist, so dass die Antriebsachse (17) in der Führungsöffnung (25) geführt wird.

3. Deckel (1) nach Anspruch 2, **dadurch gekennzeichnet, dass** das Zwischenstück (26) eine Platine ist, die auf einer Mittelachse (7) des Deckels (1) montiert ist.

4. Deckel (1) nach einem der Ansprüche 2 bis 3, **dadurch gekennzeichnet, dass** das obere Stück (30) über dem die Platine bildenden Zwischenstück (26) angeordnet ist.

5. Deckel (1) nach Anspruch 4, **dadurch gekennzeichnet, dass** das obere Stück (30) von einer Kappe gebildet ist, die als Einsteckmittel (24) mit mindestens einem Wulst (24) versehen ist, der geeignet ist, in die Führungsnut (23) eingeschoben zu werden, wobei die Kappe die Platine (26) bedeckt und auf der Mittelachse (7) des Deckels (1) montiert ist.

6. Deckel (1) nach Anspruch 5, **dadurch gekennzeichnet, dass** die Kappe mit mindestens einem radialen Abdeckarm (31) versehen ist, der den Antriebsarm (13) bedeckt.

7. Deckel (1) nach einem der vorhergehenden Ansprüche, **dadurch gekennzeichnet, dass** die äußeren und inneren Führungsmittel radial ausgerichtet sind.

8. Deckel (1) nach einem der Ansprüche 1 bis 7, **dadurch gekennzeichnet, dass** er mit Indexierungsmitteln für die Position des oberen Stücks (30) innerhalb des Deckels (1) versehen ist.

9. Deckel (1) nach Anspruch 8 und einem der Ansprüche 5 oder 6, **dadurch gekennzeichnet, dass** die Indexierungsmittel zwei Durchgänge (42, 43) umfassen, die in der Kappe ausgenommen und von einem zentralen Durchgang (42) und einem seitlichen Durchgang (43) gebildet sind, um sich mit der Mittelachse (7) des Deckels (1) bzw. der Achse eines auf dem Deckel montierten Ventils (50) zu indexieren.

10. Deckel (1) nach einem der vorhergehenden Ansprüche, **dadurch gekennzeichnet, dass** er umfasst:
- zwei Verriegelungsbacken, die radial beweglich auf dem Deckel (1) in diametral entgegengesetzter Position mit Hilfe von zwei Antriebsarmen mit je einer Antriebsachse (17) und einer Führungsnut (23) montiert sind,
- eine Platine (26), die mit zwei Führungsöffnungen (25) versehen ist, um jede der Antriebsachsen (17) aufzunehmen und zu führen,
- eine Kappe, die mit einer zentralen Scheibe (30A) versehen ist, die die Platine (26) bedeckt, welche auf die Kappe geschraubt ist, wobei die Kappe zwei radiale Arme (31) umfasst, die die Antriebsarme (13) bedecken und mit zwei Wülsten (24) versehen sind, die sich in die Führungsnuten (23) der Antriebsarme (13) einsetzen.

11. Dampfdruckkochtopf für Nahrungsmittel, umfassend einen Behälter und einen Deckel (1) nach einem der Ansprüche 1 bis 10.

## Claims

1. Lid (1) for an appliance for cooking food under pressure, intended to be attached sealingly on a vessel in order to form a sealed cooking chamber, said lid being provided with at least one locking jaw (5) connected to a drive arm (13), mounted so as to be able to move radially on the lid (1) in order to provide the locking/unlocking of the lid (1) on the vessel by means of a control device (6) which is able to act on a drive spindle (17) connected to the drive arm (13), which is thus secured to said at least one locking jaw (5) by one of its ends, referred to as the external end (14), the drive spindle (17) being permanently fixed to the drive arm (13) towards its other end, referred to as the internal end (15), said lid being provided with a system for guiding the radial movement of said at least one locking jaw (5), said guidance system being formed by guidance means separated from each other along the drive arm (13), in order to form internal guidance means and external guidance means, said external guidance means being formed by a guide groove (23) provided in the drive arm (13) and by a male means (24) secured to a top piece (30) disposed above the drive arm (13).

2. Lid (1) according to claim 1, **characterised in that** the internal guidance means comprises the drive spindle (17) and a guidance aperture (25) provided in the intermediate piece (26) disposed above the drive arm (13) so that the drive spindle (17) is guided in the guidance aperture (25).

3. Lid (1) according to claim 2, **characterised in that** the intermediate piece (26) is a plate mounted on a central spindle (7) of the lid (1).

4. Lid (1) according to one of claims 2 to 3, **characterised in that** the top piece (30) is disposed above the intermediate piece (26) forming a plate.

5. Lid (1) according to claim 4, **characterised in that** the top piece (30) is formed by a cap provided as a male means (24) with at least one protrusion (24) able to be fitted in the guidance groove (23), said cap fitting on top of the plate (26) and being mounted on the central spindle (7) of the lid (1).

6. Lid (1) according to claim 5, **characterised in that** the cap is provided with at least one radial covering arm (31) fitting on top of the drive arm (13).

7. Lid (1) according to one of the preceding claims, **characterised in that** the external and internal guidance means are aligned radially.

8. Lid (1) according to one of claims 1 to 7, **characterised in that** it is provided with means for locating the position of the top piece (30) in the lid (1).

9. Lid (1) according to claim 8 and one of claims 5 or 6, **characterised in that** the location means comprise two passages (42, 43) provided in the cap and formed by a central passage (42) and a lateral passage (43) in order to be located respectively with the central spindle (7) of the lid (1) and the spindle of a valve (50) mounted on the lid.

10. Lid (1) according to one of the preceding claims, **characterised in that** it comprises:
- two locking jaws mounted so as to be able to move radially on the lid (1) in a diametrically opposed position by means of two drive arms each with a drive spindle (17) and a guidance groove (23),
- a plate (26) provided with two guidance apertures (25) for receiving and guiding each of the drive spindles (17),
- a cap provided with a central disc (30A) fitting on top of the plate (26), which is screwed onto said cap, said cap comprising two radial arms (31) covering the drive arms (13) and provided with two protrusions (24) coming to be inserted in the guidance grooves (23) of the drive arms (13).

11. Appliance for cooking food under pressure, comprising a vessel and a lid (1) according to one of claims 1 to 10.
